# EUROPEAN PATENT SPECIFICATION

(11) **EP 1 836 229 B1**
(45) Date of publication and mention of the grant of the patent: **29.07.2009**
(21) Application number: 05820946.1
(22) Date of filing: 21.12.2005
(51) Int. Cl.: C08F 2/00

(54) **RATIONALLY DESIGNED SELECTIVE BINDING POLYMERS**
RATIONELL ENTWICKELTE SELEKTIV BINDENDE POLYMERE
POLYMÈRES CHÉLATANTS SÉLECTIFS CONÇUS SUR MESURE

(30) Priority: 21.12.2004 GB 0427901
(43) Date of publication of application: 26.09.2007
(73) Proprietor: CRANFIELD UNIVERSITY, Milton Keynes, Bedfordshire MK45 4DT (GB)
(72) Inventor: PILETSKY, Sergey Anatoliyovich, Cranfield Bedfordshire MK43 0EE (GB); PILETSKA, Olena Volodimirivna, Cranfield Bedfordshire MK43 0EE (GB); KARIM, Khalku, Cambridge Cambridgeshire CB4 2ED (GB); LEGGE, Coulton Heath, Welwyn Hertfordshire AL6 OTS (GB); SUBRAHMANYAM, Sreenath, Chennai-madras 600 078 (IN)
(74) Representative: Stuart, Ian Alexander
(86) International application number: PCT/GB2005/004962
(87) International publication number: WO 2006/067431

(56) References cited:
- WO-A-01/55235
- S.A.PILETSKY, K. KARIM, E.V. PILETSKA, C.J. DAY, K.W. FREEBAIRN, C. LEGGE AND A.P.F. TURNER: "Recognition of Ephedrine enantiomers by molecular imprinted polymers designed using a computational approach" ANALYST, vol. 126, no. 10, 18 September 2001 (2001-09-18), pages 1826-1830, XP008060963 Cambridge
- WEIFAN ZHENG ET AL: "Rational Combinatorial Library Design. 1. Focus-2D: A New Approach to the Design of Targeted Combinatorial Chemical Libraries" JOURNAL OF CHEMICAL INFORMATION AND COMPUTER SCIENCES, AMERICAN CHEMICAL SOCIETY, COLOMBUS,OHIO, US, vol. 38, no. 2, 3 April 1998 (1998-04-03), pages 251-258, XP002162527 ISSN: 0095-2338
- SUNG JIN CHO ET AL: "Rational Combinatorial Library Design. 2. Rational Design of Targeted Combinatorial Peptide Libraries Using Chemical Similarity Probe and Inverse QSAR Approaches" JOURNAL OF CHEMICAL INFORMATION AND COMPUTER SCIENCES, AMERICAN CHEMICAL SOCIETY, COLOMBUS,OHIO, US, vol. 38, no. 2, 3 April 1998 (1998-04-03), pages 259-268, XP002162526 ISSN: 0095-2338
- TAKEUCHI T ET AL: "COMBINATORIAL MOLECULAR IMPRINTING: AN APPROACH TO SYNTHETIC POLYMER RECEPTORS" ANALYTICAL CHEMISTRY, AMERICAN CHEMICAL SOCIETY. COLUMBUS, US, vol. 71, no. 2, 15 January 1999 (1999-01-15), pages 285-290, XP000955466 ISSN: 0003-2700 cited in the application
- CHIANELLE, I. ET AL: "Rational Design of a Polymer Specific for Microcyctin-LR Using a Computational Approach" ANALYTICAL CHEMISTRY, AMERICAN CHEMICAL SOCIETY, vol. 74, no. 6, 15 March 2002 (2002-03-15), pages 1288-1293, XP002370865 Columbus, US cited in the application

## Description

### Technical Field

The present invention relates to rationally designed selective binding polymers - to the design process, to the synthesis of the polymers, to the polymers, and to their uses.

Molecularly imprinted polymers (MIPs), materials with artificially created receptor-like recognition properties have recently attracted significant attention as potential substitutes for unstable receptors and antibodies in affinity chromatography, membranes, capillary electrophoresis and sensor technology (US patents 5110833, 5587273, 5756717, 5728296, 5786428 and 5849215). Among the factors limiting their practical application is the absence of a general procedure for polymer synthesis. Several attempts have been made to develop a general procedure for rational design of the imprinted polymers (Nicholls I. A. (1995). Thermodynamic consideration for the design of and ligand recognition by molecularly imprinted polymers, Chem. Lett., 1035-1036; Whitcombe M. J., Martin L., Vulfson E. N. (1998). Predicting the selectivity of imprinted polymers. Chromatography, 47, 457-464; Takeuchi T., Fukuma D., Matsui J. (1999). Combinatorial molecular imprinting: an approach to synthetic polymer receptors. Anal. Chem., 71, 285-290.) Recently we proposed the application of molecular modelling for the design of molecularly imprinted polymers (MIPs) (WO 01/55235 and Chianella I., Lotierzo M., Piletsky S. A., Tothill I. E., Chen B., Karim K., Turner A. P. F. (2002). Rational design of a polymer specific for microcystin-LR using a computational approach. Anal. Chem., 74, 1288-1293.) The method involved screening of a virtual library of molecular models of functional monomers, containing polymerizable residues and residues able to form e.g. electrostatic interactions for their ability to interact with a molecular model of the target compound (template). The monomers giving the highest binding score were used in polymer synthesis, in the presence of the template in solution. This helped to co-ordinate mutual positioning of the selected monomers in the synthesised polymer leading to the formation of selective binding sites.

### Disclosure of Invention

In a first aspect the invention provides a procedure for computer aided rational molecular design, comprising:
(a) establishing a virtual library of functional monomers with the aid of a computer;
(b) designing a molecular model of a target molecule by a computer facilitated molecular mechanical method;
(c) screening said virtual library of functional monomers to provide data indicating the strength with which each monomer can bond to the target molecule;
(d) designing a molecular model of a non-target molecule by a computer facilitated molecular mechanical method;
(e) screening said virtual library of functional monomers to provide data indicating the strength with which each monomer can bond to the non-target molecule; and
(f) comparing the data from steps (c) and (e) and selecting one or more monomers indicated to bind more strongly to the target molecule than to the non-target molecule, or vice versa.

The process may include a further step (g) of synthesising a polymer from monomers comprising one or more of said selected monomers.

Whereas in our earlier work polymerisation was carried out in the presence of the target compound ("template"), it has come to our attention that for some applications it might not be necessary to have the template in solution together with the computationally selected monomers. The resulting polymers will tend to have lower affinity to the template than MIP, but one might benefit from the cheaper fabrication procedure and from the absence of template leaching which often contaminates samples. The rational selection of monomers which have reasonably high affinity to the template, provided by the computer, should be sufficient for developing polymeric adsorbents for many practical applications, such as e.g. solid phase extraction. The present invention includes this approach together with potential application of computationally designed polymers.

In the process of the invention, a virtual library of molecular models of functional monomers is produced, usually containing molecules that possess polymerizable residues and residues able to interact with template through electrostatic, hydrophobic van-der-Waals forces, dipole-dipole interactions or reversible covalent bonds. In each of steps (b) and (d) a molecular model of the target or non-target molecule is prepared. Charges for each atom (corresponding to specific experimental conditions) are calculated, and the structure of the template and monomers refined using molecular mechanical methods. Each of the entries in the virtual library is probed for its possible interaction with the molecular models. Usually, one or more monomers giving a high binding score with the target and a significantly lower binding score with the non-target molecule are selected as the best candidates for polymer preparation. This procedure can use a plurality of molecular models of different non-target compounds (potentially interfering compounds) so that one may identify those monomers which favour the target compound over a plurality of potential interferents.

The library of functional monomers may include monomers of some or all of the following types: vinyl monomers, allyl monomers, acetylenes, acrylates, methacrylates, amino acids, nucleosides, nucleotides, carbohydrates, phenols, heterocycles, aniline and other aromatic amines, and derivatives of any of the preceding compounds.

Preferable monomers are those that are able to interact with the template through non-covalent interactions and be polymerized through a radical mechanism. Co-monomers may be included, particularly as cross-linking agents, e.g. EGDMA (ethylene glycol dimethacrylate). A porogen may be included in the polymerisation system, e.g. DMF.

The template or target molecule may be selected from biological receptors, nucleic acids, hormones, heparin, antibiotics, vitamins, drugs, cell components and components of viruses such as carbohydrates, saccharides, nucleoproteins, mucoproteins, lipoproteins, peptides and proteins, glycoproteins, glucosaminoglycans, steroids, agrochemicals and other organic compounds.

There may be a step of optimisation of monomer mixture and experimental conditions by "feeding" specific parameters (e.g. charge, dielectric constant, temperature) into the modelling. If, for example, the monomers are not soluble in organic solvents then the dielectric constant could be changed from vacuum to water or the constant of the solvent used for polymerisation. The temperature in the modelling procedure can be also adjusted to the one applied during polymerisation and binding steps.

Polymerisation of the selected one or more monomers may be carried out *in the absence of template* using any appropriate format (e.g. bulk, suspension, emulsion, membranes, coatings).

The synthesised materials may be used in procedures such as separation, purification, removal, analysis and sensing.

It could be desirable also to screen selected monomers (if more than one) for possible interactions between them to prevent undesirable interferences. All components of the modelling process can be used and accounted for individually or in combination in the optimization of the monomer composition.

When the polymer preparation is carried out in the *absence of the template*, the polymer affinity will be determined mainly by the affinity of individual monomers or by the affinity of several randomly positioned monomers identified during modelling. The polymers can be synthesised by free radical polymerisation, living polymerisation, ionic polymerisation or polycondensation. Polymers can be also prepared in a form suitable for future applications - coatings, particles, membranes, or bulk material.

The synthesised materials may be used in separation and sensing. Thus polymers can be used as solid phase extraction materials for removal and purification of analytes or groups of analytes. Polymers can be used as adsorbents in chromatography. If the selected monomer(s) comprise chiral compound(s), then the synthesised polymer may be usable for enantioseparation. It is also possible to foresee the application of high affinity materials in sensing. One considerable advantage in the absence of the template from the polymerisation system is the avoidance of all risk of template leaching, which can complicate MIP applications in separation, sensing and solid phase extraction.

In a variant of the process, by selecting monomers with very low affinity for target compounds, polymers for use in protective and antiadhesive coatings may be produced.

### Modes for Carrying Out the Invention

The present invention will now be further described in detail with reference to the following examples, which are intended to illustrate some of the possibilities, but are in no way intended to limit the scope of the invention.

### Example 1. Computational screening and identification of best monomeric composition capable of discriminating between atrazine and bentazone

### Molecular modeling

Silicon Graphics Octane workstation, running the IRIX 6.5 operating system was used to execute the software packages SYBYL^{™} (Tripos Inc). The virtual library contained 8 most frequently used functional monomers (neutral and charged where appropriate) able to form non-covalent interactions with the template. The LEAPFROG^{™} algorithm (Tripos Inc) was used to analyze binding between monomers and template. 100,000 iterations were completed in approximately 4 hours and results from each run were examined and the empirical binding score was ranked by the binding interactions between the functional monomers and template (Table 1).

### Preparation of polymeric adsorbents.

A set of polymers was synthesized by thermoinitiated radical polymerization as follows. To a solution of ethylene glycol dimethacrylate (35.9 mmol) in chloroform (8.82 g) was added monomer (12.1 mmol), and 1,1'-azobis (cyclohexanecarbonitrile) (0.18 g). The monomer mixture was placed into a 50 ml glass tube, purged with nitrogen for 5 minutes, sealed and polymerized at 80 °C over 24 hours. The bulk polymers were ground and mechanically wet-sieved through 38 µm sieves. Polymer particles were collected, dried under vacuum and used for packing solid phase extraction cartridges.

### Solid phase extraction.

50 mg of polymer samples were weighed and packed into 1.5 ml SPE cartridges. 1 ml of herbicide solution in chloroform with concentration 20 µg/l were loaded onto the cartridges. Adsorbed herbicides were then recovered with 1.5 ml of MeOH/AcOH (9/1), evaporated to dryness and re-dissolved in the mobile phase before analysis. Chromatographic analysis were carried out with a Luna phenyl-hexyl column 150 x 4.6 mm and a mobile phase consisting of 35% acetonitrile, 65% Milli-Q water acidified with phosphate buffer at pH = 4.6. All experiments were made in triplicate. Typically the standard deviation in testing was below 10%.

**Table 1. The results of computational analysis of the interaction between monomers and targets - atrazine and bentazone.**

| Monomer/polymer | Binding, kcal/mol, Atrazine | Binding, kcal/mol, bentazone |
|---|---|---|
| Itaconic acid | -94.42 | -3.79 |
| Methacrylic acid | -75.06 | -16.46 |
| TFMAA | -64.08 | -8.69 |
| Acrylamide | -34.97 | -26.71 |
| Allylamine | -14.31 | -71.94 |
| VI | -13.83 | -50.24 |
| HEM | -10.58 | -11.97 |
| 4-VP | -5.80 | -8.46 |

| | | |
|---|---|---|
| TFMAA -Trifluoromethacrylic acid, VI - 1-Vinylimidazole, HEM - 2-Hydroxyethyl methacrylate, 4-VP -4-Vinylpyridine | | |

### Results and discussion.

The goal of this experiment was identification of monomers which could form a polymer able to discriminate between two different herbicides - atrazine and bentazone. Accordingly to the modelling results, polymers prepared using itaconic acid should have preference in binding to atrazine as compared to bentazone. Similarly polymer prepared using allylamine should have preferential binding to bentazone as compared with atrazine. Other monomers such as 2-hydroxyethyl methacrylate and 4-vinylpyridine should bind these herbicides reasonably similarly. The result of polymer testing proved this. Thus polymers based on itaconic acid and allylamine clearly show the preference for corresponding targets (see Table 2). This experiment proves potential possibility of using computational approach for identifying polymer composition with selectivity for separate chemical species.

**Table 2. The results of recovery of atrazine and bentazone from the polymers synthesized using itaconic acid, allylamine and 4-vinyl pyridine.**

| Monomer/polymer | Recovery, %, atrazine | Recovery, %, Bentazone |
|---|---|---|
| Itaconic acid | 80 | 31 |
| Allylamine | 17 | 100 |
| 4-VP | 33 | 41 |

| | | |
|---|---|---|
| 4-VP -4-Vinylpyridine | | |

### Example 2. Computer aided design of polymers with selectivity for Cocaine, Deoxyephedrine and Methadone.

Screening for three templates: cocaine, deoxyephedrine and methadone was performed as described in Example 1 using a library containing 15 monomers: acrolein, acrylamide, acrylic acid, acrylonitrile, allylamine, AMPSA (acrylamido-2-methyl-1-propanesulphonic acod), DEAEM (N,N-diethylamino ethyl methacrylate, itaconic acid, methacrylic acid, N,N-methylene bisacryl amide, styrene, TFMAA, vinylimidazole, 2-vinylpyridine and 4-vinylpyridine. All monomers were co-polymerised with ethylene glycol dimethacrylate using DMF as a porogen. The synthesised polymers were ground, sieved and packed in HPLC columns. The evaluation of adsorbents was made in chloroform containing acetic acid. The results of the evaluation clearly indicate that molecular modelling was able to identify 7 of the best monomers.

**Table 2. Selection of best monomers for binding of Cocaine, Deoxyephedrine and Methadone by molecular modelling.**

| **Deoxyephedrine** | **Cocaine** | **Methadone** |
|---|---|---|
| 7 best monomers | 7 best monomers | 7 best monomers were |
| were predicted | were predicted | predicted (best - |
| (best - AMPSA and | (best - AMPSA | AMPSA and TFMAA) |
| acrylic acid) | and TFMAA) | |

It can be seen that a polymer of acrylic acid can preferentially bind deoxyephedrine, whereas a polymer of TFMAA can preferentially bind cocaine, in a mixture containing the three drugs.

### Example 3. Computer aided design of a polymer with enhanced affinity to salbutamol.

A set of polymers have been designed for recognition of salbutamol. Two monomers were selected during computer simulation: itaconic acid (-73,2 kCal Mol⁻¹) and methacrylic acid (-55.9 kCal Mol⁻¹). Two polymers were synthesised and their recognition ability studied: itaconic acid based polymer and a methacrylic acid based polymer. The chromatogaphic evaluation of those polymers was performed in acetonitrile. The results indicate that the polymer synthesised using the monomer with the higher binding score (itaconic acid) had strong affinity to the template (K'=3.25 and it was possible to study the polymer-template interaction in acetonitrile containing 7.5% acetic acid. Under the same conditions, the polymer based on methacrylic acid had very little affinity to salbutamol (K'=0.0, substance was eluted in dead volume).

This provides further evidence that polymers produced in the absence of a template material can still show good selectivity. Examples 1 and 3 taken together show that an itaconic acid polymer would be successful at binding salbutamol in the presence of bentazone.

## Claims

1. A procedure for computer aided rational molecular design, comprising:
(a) establishing a virtual library of functional monomers with the aid of a computer;
(b) designing a molecular model of a target molecule by a computer facilitated molecular mechanical method;
(c) screening said virtual library of functional monomers to provide data indicating the strength with which each monomer can bond to the target molecule;
(d) designing a molecular model of a non-target molecule by a computer facilitated molecular mechanical method;
(e) screening said virtual library of functional monomers to provide data indicating the strength with which each monomer can bond to the non-target molecule; and
(f) comparing the data from steps (c) and (e) and selecting one or more monomers indicated to bind more strongly to the target molecule than to the non-target molecule, or vice versa.

2. A procedure according to claim 1 wherein the functional monomers each have a first portion that is capable of polymer formation and a second portion that is capable of interacting with a target molecule.

3. A procedure according to claim 2 wherein said second portion is capable of interacting with a target molecule through one or more of electrostatic, hydrophobic, van-der-Waals forces, dipole-dipole interactions and reversible covalent bonds.

4. A procedure according to any preceding claim wherein the monomers comprise monomers selected from the group consisting of vinyl monomers, allyl monomers, acetylenes, acrylates, methacrylates, amino acids, nucleosides, nucleotides, carbohydrates, phenols, heterocycles, and aromatic amines.

5. A procedure according to any preceding claim including a further step (g) of synthesising a polymer from monomers comprising one or more of said selected monomers.

6. A procedure according to claim 5 wherein said polymer is synthesised in the presence of the target molecule.

7. A procedure according to claim 5 wherein said polymer is synthesised in the absence of the target molecule compound.

8. A procedure according to claim 5, 6 or 7 wherein the monomers selected in step (f) bind more strongly, and including a step (h) of using said polymer for selectively binding the target molecule compound.

9. A procedure according to claim 8 wherein in step (h) said polymer is used for selectively binding the target molecule in the presence of the non-target molecule.

10. A procedure according to claims 5, 6 or 7 including a step (h) of using said polymer in a process selected from separation, purification, removal, analysis, sensing, and chiral separation, or as a protective or antiadhesive coating.

## Patentansprüche

1. Verfahren zum computergestützten rationellen Moleküldesign, Folgendes umfassend:
(a) Herstellen einer virtuellen Bibliothek funktioneller Monomere mit Hilfe eines Computers;
(b) Entwerfen eines Molekülmodells eines Zielmoleküls mittels eines computerunterstützten Molekülmechanikverfahrens;
(c) Screenen der virtuellen Bibliothek funktioneller Monomere zur Bereitstellung von Daten, welche die Festigkeit angeben, mit der sich jedes Monomer an das Zielmolekül binden kann;
(d) Entwerfen eines Molekülmodells eines Nicht-Zielmoleküls mittels eines computergestützten Molekülmechanikverfahrens;
(e) Screenen der virtuellen Bibliothek funktioneller Monomere zur Bereitstellung von Daten, welche die Festigkeit angeben, mit der sich jedes Monomer an das Nicht-Zielmolekül binden kann, und
(f) Vergleichen der Daten aus den Schritten (c) und (e) und Auswählen eines oder mehrerer Monomere, von denen angegeben wurde, dass sie sich fester an das Zielmolekül als an das Nicht-Zielmolekül binden oder umgekehrt.

2. Verfahren nach Anspruch 1, worin die funktionellen Monomere jeweils einen ersten Abschnitt aufweisen, der in der Lage ist, Polymere zu bilden, und einen zweiten Abschnitt, der in der Lage ist, mit einem Zielmolekül wechselzuwirken.

3. Verfahren nach Anspruch 2, worin der zweite Abschnitt in der Lage ist, mit einem Zielmolekül über eine oder mehrere von elektrostatischer, Hydrophob-, van-der-Waals-Kraft- und Dipol-Dipol-Wechselwirkung sowie reversibler kovalenter Bindung wechselzuwirken.

4. Verfahren nach einem der vorangegangenen Ansprüche, worin die Monomere Monomere umfassen, die aus der aus Vinylmonomeren, Allylmonomeren, Acetylenen, Acrylaten, Methacrylaten, Aminosäuren, Nucleosiden, Nucleotiden, Kohlenhydraten, Phenolen, Heterozyklen und aromatischen Aminen bestehenden Gruppe ausgewählt wurden.

5. Verfahren nach einem der vorangegangenen Ansprüche, umfassend einen weiteren Schritt (g) des Synthetisierens eines Polymers aus Monomeren, die eines oder mehrere der ausgewählten Monomere umfassen.

6. Verfahren nach Anspruch 5, worin das Polymer in Gegenwart des Zielmoleküls synthetisiert wird.

7. Verfahren nach Anspruch 5, worin das Polymer in Abwesenheit der Zielmolekül-Verbindung synthetisiert wird.

8. Verfahren nach einem der Ansprüche 5, 6 oder 7, worin sich die in Schritt (f) ausgewählten Monomere fester binden und das einen Schritt (h) der Verwendung des Polymers zur selektiven Bindung der Zielmolekülverbindung umfasst.

9. Verfahren nach Anspruch 8, worin in Schritt (h) das Polymer zur selektiven Bindung des Zielmoleküls in Gegenwart des Nicht-Zielmoleküls verwendet wird.

10. Verfahren nach einem der Ansprüche 5, 6 oder 7, umfassend einen Schritt (h) der Verwendung des Polymers in einem aus Trennung, Reinigung, Entfernung, Analyse, Messung und chiraler Trennung ausgewählten Prozess oder als Schutz- oder Antihaftbeschichtung.

## Revendications

1. Procédé pour une conception moléculaire rationnelle assistée par ordinateur, comprenant:
(a) établir une librairie virtuelle de monomères fonctionnels à l'aide d'un ordinateur;
(b) concevoir un modèle moléculaire d'une molécule cible par une méthode mécanique moléculaire facilitée par ordinateur;
(c) balayer ladite librairie virtuelle de monomères fonctionnels pour fournir des données indiquant la force avec laquelle chaque monomère peut se lier à la molécule cible;
(d) concevoir un modèle moléculaire d'une molécule non-cible par une méthode mécanique moléculaire facilitée par ordinateur;
(e) balayer ladite librairie virtuelle de monomères fonctionnels pour fournir des données indiquant la force avec laquelle chaque monomère peut se lier à la molécule non-cible; et
(f) comparer les données des étapes (c) et (e) et sélectionner un ou plusieurs monomères indiqués pour se lier plus fortement à la molécule cible qu'à la molécule non-cible, ou vice-versa.

2. Procédé selon la revendication 1, dans lequel les monomères fonctionnels possèdent chacun une première portion qui est apte à former des polymères et une seconde portion qui est apte à interragir avec une molécule cible.

3. Procédé selon la revendication 2, dans lequel ladite seconde portion est apte à interragir avec une molécule cible par une ou plusieurs d'interractions électrostatiques, hydrophobes, forces van-der-Waals, dipole-dipole et des liaisons covalentes réversibles.

4. Procédé selon l'une quelconque des revendications précédentes, dans lequel les monomères comprennent des monomères sélectionnés dans le groupe consistant en monomères de vinyle, monomères d'allyle, acétylènes, acrylates, méthacrylates, acides aminés, nucléosides, nucléotides, carbohydrates, phénols, hétérocycles et amines aromatiques.

5. Procédé selon l'une quelconque des revendications précédentes, incluant une autre étape (g) consistant à synthétiser un polymère à partir de monomères comprenant un ou plusieurs desdits monomères sélectionnés.

6. Procédé selon la revendication 5, dans lequel ledit polymère précité est synthétisé en présence de la molécule cible.

7. Procédé selon la revendication 5, dans lequel ledit polymère est synthétisé en l'absence du composé de molécule cible.

8. Procédé selon la revendication 5, 6 ou 7, dans lequel les monomères sélectionnés à l'étape (f) se lient plus fortement, et comprenant une étape (h) consistant à utiliser ledit polymère pour la liaison sélective au composé de molécule cible.

9. Procédé selon la revendication 8, dans lequel à l'étape (h), ledit polymère est utilisé pour la liaison sélective de la molécule cible en présence de la molécule non-cible.

10. Procédé selon les revendications 5, 6 ou 7, comprenant une étape (h) consistant à utiliser ledit polymère dans un processus sélectionné parmi la séparation, purification, retrait, analyse, détection et séparation chirale, ou comme revêtement de protection ou anti-adhésif.
